# EUROPÄISCHE PATENTSCHRIFT

(11) **EP 0 310 077 B1**
(45) Veröffentlichungstag und Bekanntmachung des Hinweises auf die Patenterteilung: **08.09.1993**
(21) Anmeldenummer: 88116091.5
(22) Anmeldetag: 29.09.1988
(51) Int. Cl.: G02B 27/00, G09F 19/16

(54) **Vorrichtung zur Erzeugung von durch Spiegelung entstehenden Luftbildern**
Device for generating aerial images by means of reflection
Dispositif pour la génération d'images par réflexion

(30) Priorität: 29.09.1987 DE 8713077 U; 14.03.1988 DE 3808406
(43) Veröffentlichungstag der Anmeldung: 05.04.1989
(73) Patentinhaber: Lettner, Wolfgang, 53945 Blankenheim-Mülheim (DE)
(72) Erfinder: Lettner, Wolfgang, 53945 Blankenheim-Mülheim (DE)
(74) Vertreter: Freischem, Werner, Dipl.-Ing.

(56) Entgegenhaltungen:
- EP-A- 0 200 407
- DE-A- 457 649
- US-A- 3 802 764
- US-A- 4 759 621

## Beschreibung

Die Erfindung bezieht sich auf eine Vorrichtung zur Erzeugung von durch Spiegelung entstehenden Luftbildern mit einem im wesentlichen kubischen Gehäuse mit einem Boden, einer Decke, zwei Seitenwänden und einer Rückwand, welches an der Vorderseite zur Bildung einer Schauöffnung zumindest teilweise offen ist und hinter der Schauöffnung eine durchsichtige und spiegelnde Scheibe aufweist, die, ausgehend von der oberen Kante der Schauöffnung, im Winkel von etwa 45° zur Horizontalen geneigt verläuft.

Eine Vorrichtung dieser Art ist aus der deutschen Patentschrift 457 649 bekannt. Bei dieser bekannten Vorrichtung ist in einem kastenartigen Gehäuse die teils durchsichtige und teils spiegelnde Scheibe hinter einer Schauöffnung schräg angeordnet und vor oder hinter dieser Scheibe befinden sich ein oder mehrere transparente Bildplatten mit dahinterliegender Lichtquelle und eine Aufnahmefläche für ein durch einen Projektionsapparat erzeugtes lebendes Bild.

Bei der bekannten Vorrichtung werden ein projiziertes Bild mit Bildern transparenter Bildplatten miteinander zu einem Gesamtbild kombiniert. Dabei kann der Abstand der transparenten Bildplatten und des Bildschirmes für das Projektionsbild von der teils durchsichtigen und teils spiegelnden Scheibe verändert werden. Dabei ist aber das projizierte Bild im Verhältnis zum Gesamtbild relativ klein, weil der Abstand des Projektors vom Bildschirm klein und durch die Abmessungen des Gehäuses beschränkt ist.

Der Erfindung liegt die Aufgabe zugrunde, eine Vorrichtung zu schaffen, die es ermöglicht, bei kompakter Ausbildung der Vorrichtung auf einer Bühne reelle Gegenstände und Personen und durch Projektion erzeugte Bilder erscheinen zu lassen, wobei sich auch das projizierte Bild über einen großen Bereich der Bühne erstreckt.

Diese Aufgabe wird dadurch gelöst, daß das Gehäuse durch eine von der Rückwand bis zum mittleren Bereich des Gehäuses sich erstreckende Zwischenwand in einen unteren Projektionsraum und einen oberen Bühnenraum unterteilt ist, wobei im Projektionsraum mindestens ein Projektor und im Abstand davon ein Bildschirm angeordnet sind und vor dem Projektionsraum und unter der durchsichtigen und spiegelnden Scheibe ein zur Scheibe gleichsinnig geneigter Umlenkspiegel angeordnet ist.

Die Vorrichtung nach der Erfindung ist als eine elativ große, 3 bis 9 m breite und entsprechend tiefe Bühne ausgebildet, die aus leicht zusammensetzbaren Elementen auf Ausstellungen, Messen oder dergleichen aufgebaut werden kann.

Der Umlenkspiegel sowie die durchsichtige und vorzugsweise 18 bis 25 % reflektierende Scheibe sind etwa im Winkel von 45° zur Horizontalen geneigt. Die Anordnung der transparenten und teilweise reflektierenden Scheibe ist derart, daß sie den Zuschauern den Blick auf die Bühne freigeben. Auf dieser Bühne können im Raum gestaffelt dreidimensionale Gegenstände, Personen und Luftbilder erscheinen, wobei die Personen und dreidimensionalen Gegenstände unmittelbar auf der Bühne existieren, während die Luftbilder durch Spiegelung der transparenten Scheibe entstehen. Die Luftbilder werden durch Spiegelung von Video-, Film-, Diapositiv-, Lasergrafik- und Computergrafik-Projektionen im Projektionsraum erzeugt und vom Umlenkspiegel auf die durchsichtige und teilweise reflektierende Scheibe gespiegelt. Ferner können auch die Begrenzungswände der Bühne als diffus reflektierende Projektionsflächen genutzt worden. Durch das Nebeneinander dreidimensionaler Gegenstände sowie zwei- oder dreidimensionaler Spiegelungen und deren räumliche Staffelung erscheinen dem Betrachter auch die an sich nur zweidimensionalen Luftbilder als dreidimensional. Es hat sich gezeigt, daß eine durchsichtige und etwa 20 bis 25 % reflektierende Scheibe die Luftbilder mit großer Schärtenabbildung und Lichtstärke wiedergibt, so daß eine Präsentation der Luflbilder auch in beleuchteten Räumen mit sehr guter Bildqualität möglich ist. Mit Hilfe dieser Vorrichtung ist es beispielsweise möglich, Gegenstände jeglicher Art vergrößert und auch verkleinert dreidimensional auf einer Bühne zu präsentieren. Auch kann beispielsweise das Abbild einer Person mit einem Video-Großbildproiektor auf den durchscheinenden Bildschirm projiziert und dieses Bild über den Umlenkspiegel auf die Bühne gespiegelt werden. Mit Hilfe der erfindungsgemäßen Vorrichtung ist es möglich, Luftbilder in einer Show synchron zu Musik und Text zu projizieren. Es können tonnenschwere Geräte, die sich als Luftbilder im Raum drehen, auf die Bühne projiziert werden. Aufgrund einer speziellen Aufnahmetechnik haben diese Projektionen eine dreidimensionale Wirkung. Durch Computerbildbearbeitung im Aufnahmeverfahren ist es möglich, daß beispielsweise hunderte von winzigen Bildfragmenten scheinbar über die gesamte Bühnentiefe geflogen kommen und sich zu einer Einheit, zum Beispiel einem Ballettänzer, zusammensetzen. Dieser Ballettänzer beginnt dann zur Musik über die Bühne zu tanzen, während um ihn herum räumlich gestaffelte Bühnenbauten sich vielfach wechselnd als Luftbilder aufbauen.

Weitere Merkmale der Erfindung ergeben sich aus den Patentansprüchen 2 bis 8.

In der folgenden Beschreibung werden Ausführungsbeispiele der Erfindung näher erläutert. Die Zeichnungen zeigen in
Fig. 1 eine Schnittansicht einer bühnenartig ausgebildeten Vorrichtung nach der Erfindung,
Fig. 2 aine Ansicht nach der Schnittlinie IX-IX in Fig. 1,
Fig. 3 eine der Fig. 2 entsprechende Ansicht einer Ausführungsform mit mehreren verschiebbaren Bildschirmen und Projoktoren,
Fig. 4 die Staffelung der Luftbildor bei einer Einstellung der Bildschirme gemäß Fig. 3,
Fig. 5 eine Ansicht entsprechend Fig. 3 mit in einer Linie befindlichen Projektoren und Bildschirmen,
Fig. 6 die Stellung des Luftbildes auf der Bühne bei einer Einstellung der Vorrichtung gemäß Fig. 5,
Fig. 7 eine Draufsicht auf die Bühne.
Fig. 8 eine Prinzipskizze einer Vorrichtung gemäß der Erfindung mit verkürztem Projektionsraum.

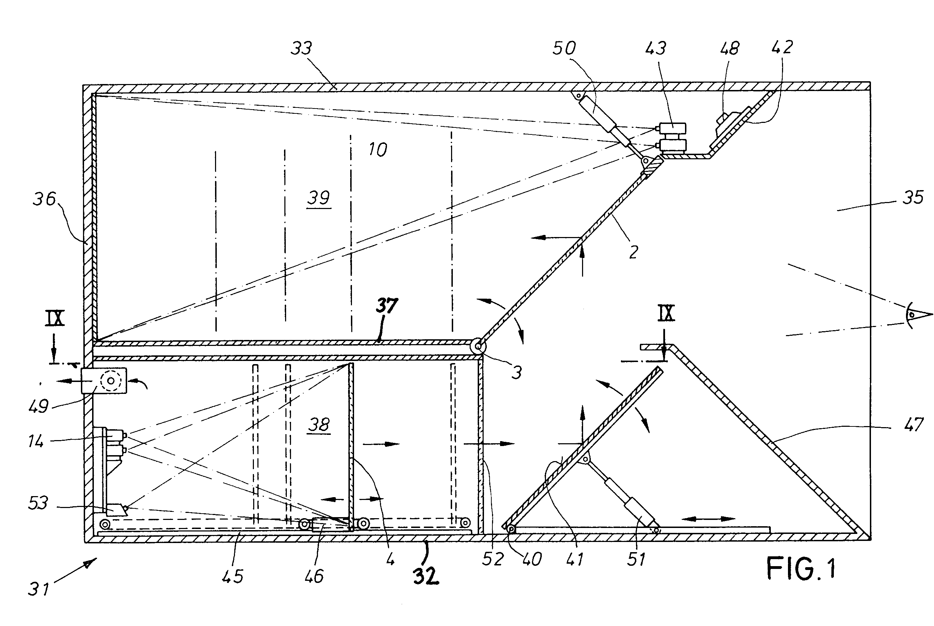

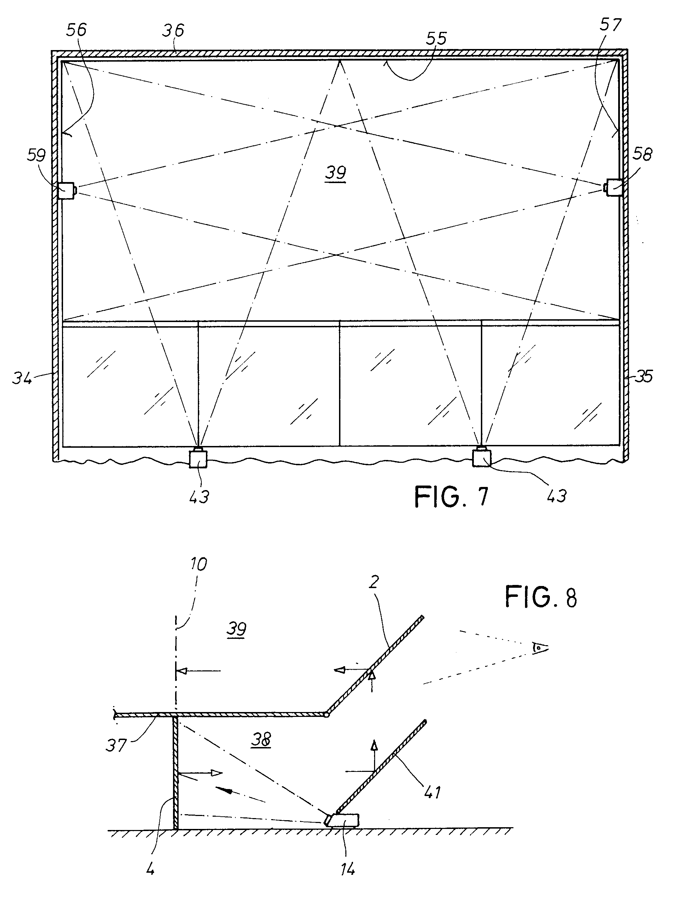

Die Vorrichtung zur Erzeugung durch Spiegelung entstehenden Luftbildern gemäß Fig. 1 weist ein im wesentlichen kubisches Gehäuses 31 mit einem Boden 32, einer Decke 33, zwei Seitenwänden 34 siehe Fig. 7 und 35 und eine Rückwand 36 auf. An der Vorderseite ist das Gehäuse 31 zumindest im oberen Teil offen, so daß für den Betrachter die Sicht auf den Bühnenraum 39 freibleibt. Das Gehäuse 31 ist durch eine von der Rückwand 36 bis zum mittleren Bereich des Gehäuses 31 sich erstreckende Zwischenwand 37 (Bühne) in den oberen Bühnenraum 39 und den unteren Projektionsraum 38 unterteilt. Im Projektionsraum 38 sind mindestens ein Projektor 14 und im Abstand davon ein durchscheinender Bildschirm 4 angeordnet. Vor dem Projektionsraum 38 ist ein um eine waagerechte, rechtwinklig zu den Seitenwänden 34 und 35 verlaufende Achse 40 geneigter Umlenkspiegel 41 angeordnet, der das auf dem Bildschirm 4 erscheinende Bild nach oben spiegelt. Über dem Umlenkspiegel 41 befindet sich eine gleichsinnig zum Umlenkspiegel 41 geneigte durchsichtige Scheibe 2, die so beschichtet ist, daß sie vorzugsweise 15 bis 25 % des auffallenden Lichtes zu den Betrachtern hin reflektiert. Das auf den Bildschirm 4 pro jizierte Bild erscheint für den Betrachter als Luftbild 10 auf der Bühne 37. Damit diese Luftbilder in der Höhe nach genau eingestellt werden können. ist der Umlenkspiegel 41 um die Achse 40 schwenkbar und feststellbar. Dazu dient eine vorzugsweise hydraulisch arbeitende Kolben-Zylinder-Einheit 51. Auch die Neigung der durchsichtigen und teilweise reflektierenden Scheibe 2 ist um die Achse 3 schwenkbar mit Hilfe einer Kolben-Zylinder-Einheit 50.

Am oberen Rand der durchsichtigen Scheibe 2 ist ein parallel zu diesem Rand von Seitenwand 34 zur Seitenwand 35 verlaufender Träger 42 angeordnet, der zur Aufnahme von Projektoren 43 und Lautsprechern 48 dient. Mit Hilfe des oder der Projektoren 43 kann auf die als diffus reflektierende Fläche ausgebildete Rückwand 36 eine Landschaft, eine Stadtsilhuette und entsprechende Bilder projiziert werden, die den Bühnenhintergrund bilden.

Um die Luftbilder 10 in den unterschiedlichen Tiefen im Bühnenraum 39 erscheinen zu lassen, ist der Abstand des Bildschirmes 4 vom Umlenkspiegel 41 veränderbar. Je näher der Bildschirm 4 am Umlenkspiegel 41 steht, umso mehr rückt das Luftbild 10 zur vorderen Kante der Bühne 37 hin und je mehr sich der Bildschirm der Rückwand 36 nähert. umso tiefer erscheint das Luftbild auf der Bühne 37.

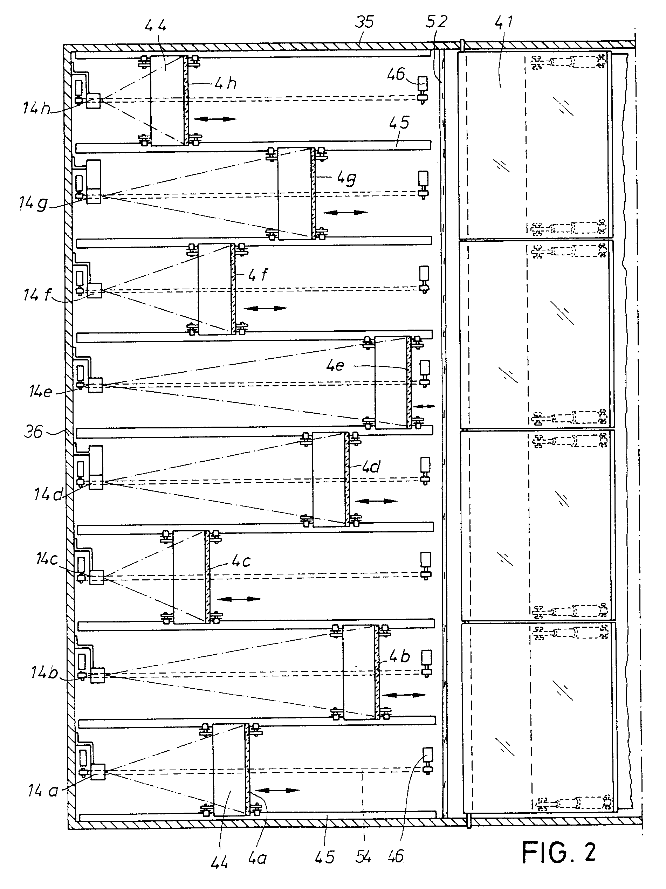

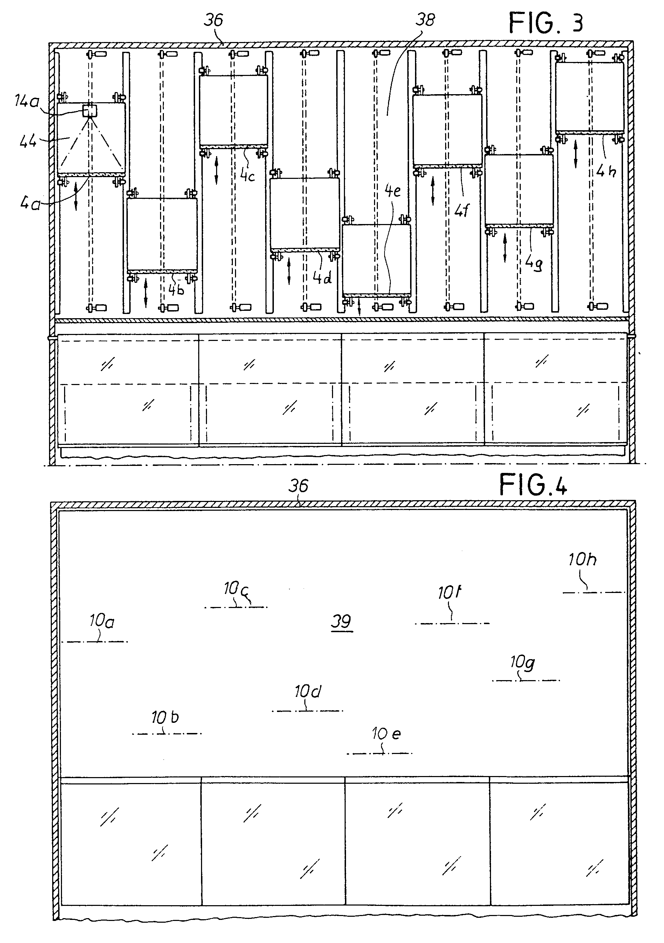

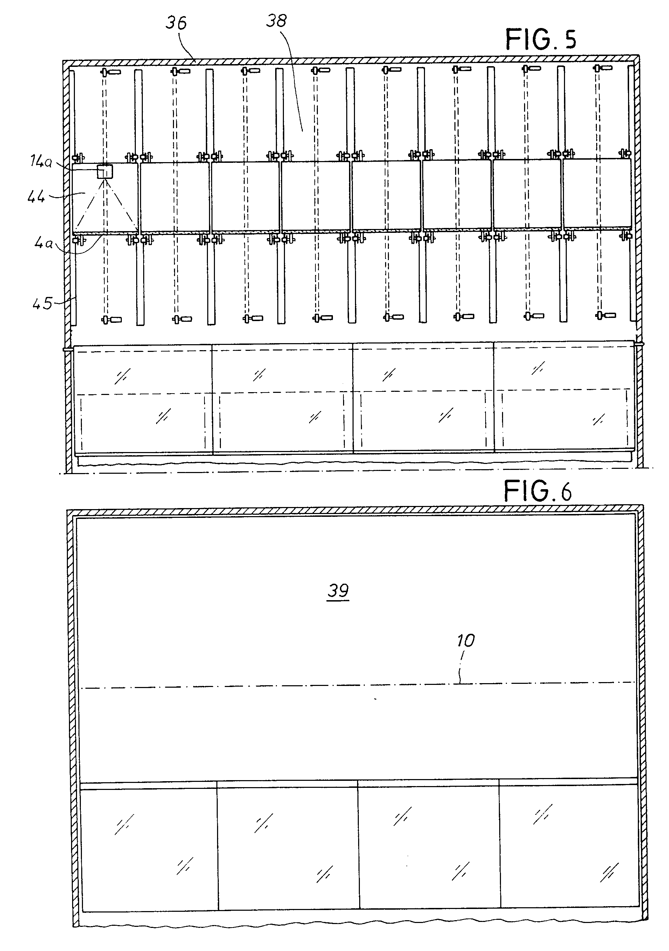

Wie die Fig. 2 und 3 zeigen, sind in Projektionsraum 38 nebeneinander mehrere, unabhängig voneinander einstellbare Bildschirme 4a bis 4h und dazugehörige Projektoren 14a bis 14h angeordnet. Die Bildschirme 4a bis 4h befinden sich auf Wagen 44 bzw. Schlitten, die entlang den Schienen 45 vor- und zurückfahrbar sind. Der Antrieb dieser Wagen 44 erfolgt über Schrittmotoren 46, welche beispielsweise mittels eines Zahnriemens 54 die Wagen 44 auf den Schienen 45 vor- und zurückbewegen. Die Schrittmotoren 46 werden in Vor- und Rücklauf sowie in der Drehzahl computergesteuert. Je nach Bedarf kann auf einem oder mehreren der Wagen 44 der Bildschirm 4 entfallen und stattdessen ein von Scheinwerfern beleuchteter Gegenstand auf dem Wagen angeordnet werden, der dann als dreidimensionales Luftbild im Bühnenraum 39 erscheint. Mit Hilfe der computergesteuert verschiebbaren Wagen 44 ist es möglich, durch räumliche Veränderung der Bildträger bzw. der Bildschirme 4a bis 4h die Luftbilder in jeder Tiefe des Bühnenraumes 39 gestaffelt erscheinen zu lassen. Ferner ist es möglich, diese Luftbilder aus der Tiefe des Raumes in den Vordergrund und zurück fliegen zu lassen. Die Luftbilder 10 können gemäß den Fig. 3 und 4 in der Tiefe des Bühnenraumes 39 gestaffelt erscheinen oder, wie die Fig. 5 und 6 zeigen, in einer Ebene aufgereiht projiziert werden.

Bei der Ausführungsform nach Fig. 1 und Fig. 2 sind auf den Wagen 44 nur die Bildschirme 4 bzw. 4a bis 4h installiert, während die Projektoren, wie Diaprojektoren, Filmprojektoren stationär an der Rückwand 36 angeordnet sind. Bei dieser Anordnung müssen die Objektive der Projektoren computergesteuert automatisch nachgestellt werden, sobald sich der Abstand des Bildschirmes vom Projektor verändert. Lediglich bei einem Lasergrafikprojektor wäre eine derartig veränderbare Optik nicht erforderlich, weil dort die Bildgröße automatisch eingestellt wird. Bei einem Video-Großbildprojektor ist es am einfachsten, diesen stationär zum zugehörigen Bildschirm anzuordnen. Wie die Fig. 3 und 5 zeigen, können alle Projektoren 14a bis 14h im festen Abstand zum zugehörigen Bildschirm 4a bis 4h auf den Wagen 44 befestigt werden.

Es ist selbstverständlich auch möglich, den Projektionsraum 38 mit Wagen 44 auszurüsten die teils nur einen Bildschirm tragen und bei denen der zugehörige Projektor in Nähe der Rückwand 36 angeordnet ist und teils einen Bildschirm und den zugehörigen Projektor tragen.

Als Bildträger kommen insbesondere Kunststoff-Rückprojektionsscheiben infrage, die bei hoher Lichthelligkeit kein verstärktes Lichtfeld in der Mitte des Bildschirmes aufweisen, damit bei Veränderung des Betrachterstandpunktes das Bild in seiner Helligkeit voll erhalten bleibt.

Um eine optimale Bildqualität der Luftbilder 10 zu erzielen, sollte das Reflexionsvermögen der durchsichtigen Scheibe 2 zwischen 15 und 25 % liegen. Ist die Reflexion zu stark, ist die Transparenz der Scheibe nicht mehr gewährleistet. Man erreicht zwar damit eine hohe Brillanz des gespiegelten Bildes, jedoch geht dabei der Eindruck verloren, daß der sich spiegelnde Gegenstand im Raum schwebt. Die Neigung der durchsichtigen und teilweise reflektierenden Scheibe beträgt 40 bis 45°. Zwar lassen sich auch Luftbilder präsentieren bei einer Neigung der durchsichtigen Scheibe bei 30° oder auch 50° , bei dieser Neigung schweben die Bilder meist zu hoch an der Decke oder zu tief auf dem Bühnenboden und die Bilder stehen nicht mehr senkrecht, sie kippen nach vorne oder hinten. Für die Feineinstellung ist die durchsichtige Scheibe sowie auch der Umlenkspiegel hydraulisch oder elektromotorisch einstellbar. Auch ist der umlenkspiegel zum Einstellen einer optimalen Präsentation der Luftbilder vor-und zurückfahrbar. Die Bühne 37 kann zur Repräsentation von Originalprodukten mit einer Drehbühne ausgestattet werden, so daß die Präsentation von Originalprodukten mit der Präsentation von Luftbildern kombiniert werden kann.

Wie die Fig. 7 zeigt, kann der Bühnenraum im Bereich der Rückwand 36 sowie an den Seitenwänden 34 und 35 mit diffus reflektierenden Aufprojektionswänden 55,56 und 57 versehen sein. Diese Projektionswände können, wie dargestellt. rechtwinklig zueinander stehen, sie können aber auch bogenförmig oder trapezförmig angeordnet sein. Auf diese Projektionswände können mittels Filmprojektor, Diaprojektor, Video-Großbildprojektor oder Lasercomputergrafikprojektor Bilder pro jiziert werden, die in ihrer Helligkeit hinter den Luftbildern zurücktreten und die nicht nur einen Hintergrund bilden, sondern welche die beim Erzeugen der Luftbilder entstehenden Lichtreflexe eliminieren. Der als Luftbild projizierte Gegenstand erscheint dadurch mit klarer Kontur und Schärfe frei im Raum. Zusätzlich wird zur Beseitigung von störenden Lichtfeldern zwischen Projektionsraum 38 und Umlenkspiegel 41 eine sich über die gesamte Breite des Projektionsschachtes erstreckende Kontrastscheibe 52 eingebaut. Der Projektionsraum 38 ist mit lichtschluckendem Material, beispielsweise schwarzen Filz, ausgekleidet.

Das Gehäuse 31 mit der gesamten technischen Einrichtung ist aus leicht zusammenfügbaren Elementen zusammengesetzt, die im zusammengelegten Zustand einen oder zwei normgerechte Container bilden. Diese Bauelemente können an Ausstellungen oder Messen zusammengesetzt und über Steckdosen und andere Steckverbindungen an das Stromnetz und ggf. an das Wassernetz zur Laserkühlung angeschlossen werden.

Ein Zentralcomputer steuert die komplette Präsentation der Luftbilder nach einem vorher erstellten Programm synchron zu Musik und Text.

Die Ausführungsform nach Fig. 8 zeigt eine Apparatur mit verkürzter Bühne und verkürztem Projektionsraum. Hier ist unterhalb des Umlenkspiegels 41 ein Projektor 14 vorgesehen, der auf eine Aufprojektionswand 4 projiziert, die im Abstand zum Projektor 14 veränderbar ist. Um den Umlenkspiegel 41 bei großen Bühnenbreiten von beispielsweise 9 m zusammensetzen zu können, muß der Spiegel ein an der Oberfläche reflektierender Oberflächenspiegel sein. In diesem Fall tritt die Fuge zwischen den Spiegeln optisch nicht in Erscheinung.
Zweckmäßigerweise ist mindestens einer der Projektoren 43 bzw. 14 parallel zur Scheibe 2 verfahrbar, so daß auf dem Bühnenraum 39 für den Betrachter ein von links nach rechts oder von rechts nach links sich bewegendes Luftbild 10 oder auf die Rückwand 36 projiziertes Bild entsteht. Ein fast gleicher Effekt läßt sich erzielen, wenn mindestens ein Projektor 43 um eine vertikale Achse über einen Verstellantrieb verschwenkbar ist.

### Bezugszeichenliste:

- 2: Scheibe
- 3: Achse
- 4,: Bildschirm
- 4a - 4h: Bildschirm
- 10: Luftbild
- 10a - 10h: Luftbild
- 14,: Projektionsgerät
- 14a - 14h: Projektionsgerät
- 31: Gehäuse
- 32: Boden
- 33: Decke
- 34: Seitenwand
- 35: Seitenwand
- 36: Rückwand
- 37: Zwischendecke. Bühne
- 38: Projektionsraum
- 39: Bühnenraum
- 40: Achse
- 41: Umlenkspiegel
- 42: Träger
- 43: Projektor
- 44: Wagen, Schlitten
- 45: Schiene
- 46: Antrieb, Schrittmotor
- 47: Sichtblende, Abweiser
- 48: Lautsprecher
- 49: Ventilator, Gebläse
- 50: Kolben-Zylinder-Einheit
- 51: Kolben-Zylinder-Einheit
- 52: Kontrastscheibe
- 53: Video-Gropbildprojektor
- 54: Zahnriemen
- 55: Aufprojektionswand
- 56: Aufprojektionswand
- 57: Aufprojektionswand
- 58: Projektor
- 59: Projektor

## Patentansprüche

1. Vorrichtung zur Erzeugung von durch Spiegelung entstehenden Luftbildern mit einem im wesentlichen kubischen Gehäuse (31) mit einem Boden (32), einer Decke (33), zwei Seitenwänden (34,35) und einer Rückwand (36), welches an der Vorderseite zur Bildung einer Schauöffnung zumindest teilweise offen ist und hinter der Schauöffnung eine durchsichtige und spiegelnde Scheibe (2) aufweist, die, ausgehend von der oberen Kante der Schauöffnung, im Winkel von etwa 45° zur Horizontalen geneigt verläuft, dadurch gekennzeichnet, daß das Gehäuse (31) durch eine von der Rückwand (36) bis zum mittleren Bereich des Gehäuses (31) sich erstreckende Zwischenwand (37) in einen unteren Projektionsraum (38) und einen oberen Bühnenraum (39) unterteilt ist, wobei im Projektionsraum (38) mindestens ein Projektor (14) und im Abstand davon ein Bildschirm (4) angeordnet sind und vor dem Projektionsraum (38) und unter der durchsichtigen und spiegelnden Scheibe (2) ein zur Scheibe (2) gleichsinnig geneigter Umlenkspiegel (41) angeordnet ist.

2. Vorrichtung nach Anspruch 1, dadurch gekennzeichnet, daß die Scheibe (2) und der Umlenkspiegel (41) um Parallele Achsen (3,40) einstellbar und feststellbar sind.

3. Vorrichtung nach Anspruch 1 oder 2, dadurch gekennzeichnet, daß oberhalb des oberen Randes der Scheibe (2) ein parallel zu diesem Rand von Seitenwand (34) zur Seitenwand (35) verlaufender Träger (42) angeordnet ist zur Aufnahme von Projektoren (43) und daß die Rückwand (36) als diffus reflektierende Fläche ausgebildet ist.

4. Vorrichtung nach einem der Ansprüche 1 bis 3, gekennzeichnet durch mehrere nebeneinander angeordnete und unabhängig voneinander einstellbare Bildschirme (4a - 4h) und dazugehörige Projektoren (14a - 14h).

5. Vorrichtung nach Anspruch 4, dadurch gekennzeichnet, daß die Bildschirme (4a - 4h) je auf einem Wagen (44) angeordnet sind, der verschiebbar und antreibbar am Boden des Projektionsraumes (38) auf Schienen (45) geführt ist.

6. Vorrichtung nach Anspruch 5, dadurch gekennzeichnet, daß der dem Bildschirm (4a - 4h) zugeordnete Projektor (14a - 14h) im Abstand vom Bildschirm auf dem Wagen (44) angeordnet ist.

7. Vorrichtung nach einem der Ansprüche 1 bis 6, dadurch gekennzeichnet, daß der Umlenkspiegel (41) ein an der Oberfläche spiegelnder Oberflächenspiegel ist, der mindestens einmal unterteilt ist und die Teilstücke (41', 41'', 41''', 41'''') des Umlenkspiegels unabhängig voneinander in ihrer Neigung einstellbar sind.

8. Vorrichtung nach einem der Ansprüche 1 bis 7, dadurch gekennzeichnet, daß mindestens ein Projektor (14 oder 43) parallel zur Scheibe (2) verfahrbar ist.

## Claims

1. Apparatus for generating aerial images which are produced by reflection, having a substantially cubic housing (31) with a floor (32), a ceiling (33), two side walls (34, 35) and a back wall (36), which housing is at least partially open at the front side to form a viewing opening and behind the viewing opening has a transparent and reflective plate (2) which, starting from the upper edge of the viewing opening, extends inclinedly at an angle of about 45° relative to the horizontal, characterised in that the housing (31) is subdivided into a lower projection space (38) and an upper stage space (39) by an intermediate wall (37) which extends from the back wall (36) to the middle region of the housing (31), wherein arranged in the projection space (38) is at least one projector (14) and at a spacing therefrom a picture screen (4) and arranged in front of the projection space (38) and below the transparent and reflective plate (2) is a deflecting mirror (41) which is inclined in the same direction relative to the plate (2).

2. Apparatus according to claim 1 characterised in that the plate (2) and the deflecting mirror (41) can be adjusted and fixed about parallel axes (3, 40).

3. Apparatus according to claim 1 or claim 2 characterised in that arranged above the upper edge of the plate (2) is a carrier (42) which extends parallel to said edge from one side wall (34) to the other side wall (35), for carrying projectors (43), and that the back wall (36) is in the form of a diffusely reflecting surface.

4. Apparatus according to one of claims 1 to 3 characterised by a plurality of juxtaposed and mutually independently adjustable picture screens (4a-4h) and associated projectors (14a-14h).

5. Apparatus according to claim 4 characterised in that the picture screens (4a-4h) are each arranged on a carriage (44) which is guided displaceably and drivably on the floor of the projection space (38) on rails (45).

6. Apparatus according to claim 5 characterised in that the projector (14a-14h) associated with the picture screen (4a-4h) is arranged at a spacing from the picture screen on the carriage (44).

7. Apparatus according to one of claims 1 to 6 characterised in that the deflecting mirror (44) is a surface mirror which is reflecting at the surface and which is divided at least once and the portions (41', 41'', 41''', 41'''') of the deflecting mirror are adjustable in respect of their inclination independently of each other.

8. Apparatus according to one of claims 1 to 7 characterised in that at least one projector (14 or 43) is displaceable parallel to the plate (2).

## Revendications

1. Dispositif pour la génération d'images par réflexion doté d'un logement essentiellement cubique (31) avec un fond (32), un couvercle (33), deux parois latérales (34,35) et une paroi postérieure (36), lequel logement est au moins partiellement ouvert sur sa face avant pour former un trou de regard et présente derrière le trou de regard une vitre transparente et réfléchissante (2), qui est inclinée selon un angle d'environ 45° par rapport à l'horizontale, à partir de l'arête supérieure du trou de regard, caractérisé en ce que le logement (31) est divisé par une cloison (37) qui s'étend depuis la paroi postérieure (36) jusque dans la région centrale du logement (31), en un espace de projection inférieur (38) et un espace scénique supérieur (39), au moins un projecteur (14) et, à distance dudit projecteur, un écran (4) étant disposés dans l'espace de projection (38), et un miroir de déviation (41) incliné dans le même sens que la vitre (2) étant disposé devant l'espace de projection (38) et sous la vitre transparente et réfléchissante (2).

2. Dispositif selon la revendication 1, caractérisé en ce que la vitre (2) et le miroir de déviation (41) peuvent être réglés autour d'axes parallèles (3,40) et en ce qu'ils peuvent être fixés.

3. Dispositif selon la revendication 1 ou 2, caractérisé en ce que, au-dessus du bord supérieur de la vitre (2) est prévu un support (42) disposé parallèlement à ce bord depuis la paroi latérale (34) jusqu'à la paroi latérale (35), pour recevoir des projecteurs (43) et en ce que la paroi postérieure (36) est une surface à réflexion diffuse.

4. Dispositif selon l'une des revendications 1 à 3, caractérisé en ce qu'il comprend plusieurs écrans (4a à 4h) disposés côte à côte et réglables indépendamment les uns des autres ainsi que les projecteurs correspondants (14a à 14h).

5. Dispositif selon la revendication 4, caractérisé en ce que les écrans (4a à 4h) sont disposés chacun sur un chariot (44), qui est guidé de façon mobile et commandable sur des rails (45) sur le fond de l'espace de projection (38).

6. Dispositif selon la revendication 5, caractérisé en ce que le projecteur (14a à 14h) associé à l'écran (4a à 4h) est disposé à distance de l'écran monté sur le chariot (44).

7. Dispositif selon l'une des revendications 1 à 6, caractérisé en ce que le miroir de déviation (41) est un miroir de surface réfléchissant à la surface, qui est divisé au moins une fois et en ce que les parties (41', 41'', 41''', 41'''') du miroir de déviation peuvent être réglées en inclinaison indépendamment les unes des autres.

8. Dispositif selon l'une des revendications 1 à 7, caractérisé en ce qu'au moins un projecteur (14 ou 43) peut être déplacé parallèlement à la vitre (2).
